# EUROPÄISCHE PATENTSCHRIFT

(11) **EP 1 369 283 B1**
(45) Veröffentlichungstag und Bekanntmachung des Hinweises auf die Patenterteilung: **02.09.2009**
(21) Anmeldenummer: 03008474.3
(22) Anmeldetag: 11.04.2003
(51) Int. Cl.: B60K 31/00, G08G 1/16

(54) **ADR-System**
Automatic distance control system
Système de contrôle de distance automatique

(30) Priorität: 31.05.2002 DE 10224494; 27.08.2002 DE 10240020
(43) Veröffentlichungstag der Anmeldung: 10.12.2003
(73) Patentinhaber: Volkswagen AG, 38436 Wolfsburg (DE)
(72) Erfinder: Andreas, Peter, 38518 Gifhorn (DE); Sochacki, Claus, 38444 Wolfsburg (DE)
(74) Vertreter: Meyer, Enno

(56) Entgegenhaltungen:
- EP-A1- 0 464 821
- DE-A1- 4 208 012
- DE-A1- 10 048 102
- US-A- 5 629 851

## Beschreibung

Die Erfindung betrifft ein Verfahren und eine Vorrichtung zur automatischen Geschwindigkeits - und Abstandsregelung eines Fahrzeugs, auch als ADR-System (Automatische Distanzregelung) bezeichnet (andernorts als Automatic Cruise Control System bekannt), und betrifft insbesondere ein Verfahren zur Zielauswahl eines derartigen ADR-Systems.

Eine derartige Geschwindigkeits- und Abstandsregelungsanlage, wie sie beispielsweise aus der deutschen Offenlegungsschrift DE 33 25 713 bekannt ist, ermöglicht es, geregelt hinter einem vorausfahrenden Fahrzeug herzufahren und das Fahrzeug in einem bestimmten Bereich automatisch zu verzögern bzw. zu beschleunigen.

Bei den meisten der bekannten Abstandsregelungsanlagen gibt es Probleme bei der Zielobjekterkennung auf gekrümmten oder mehrspurigen Strecken. Dabei kann es vorkommen, daß in einer Kurve Objekte am Straßenrand, wie Bäume oder Leitplanken, oder Fahrzeuge auf parallel verlaufenden Fahrspuren fälschlicherweise als Hindernis oder vorausfahrendes Fahrzeug erkannt und deshalb Fehlreaktionen des Systems ausgelöst werden.

Um das Auftreten solcher Fehler zu vermeiden, wird in der deutschen Offenlegungsschrift DE 42 08 012 A1 ein Verfahren zur Einstellung der Fahrgeschwindigkeit eines Kraftfahrzeuges offenbart, zu dessen Durchführung das Kraftfahrzeug mit einem Fahrgeschwindigkeitsregler und einer diesem übergeordneten Abstandsregelung mit einer Kurvenerkennungseinrichtung ausgerüstet ist. Dabei wird die Geschwindigkeit des Kraftfahrzeuges durch den Fahrgeschwindigkeitsregler auf einer vom Fahrzeugführer vorwählbaren Geschwindigkeit gehalten, wenn sich kein Fahrzeug innerhalb eines vorgegebenen Abstands vor dem Fahrzeug bewegt, andernfalls wird die Geschwindigkeit durch die Abstandsregelung entsprechend dem Abstand des Fahrzeugs zu einem vor diesem befindlichen Frontfahrzeug gesteuert. Bei laufender Abstandsregelung und Verschwinden des Frontfahrzeugs und gleichzeitigem Erkennen einer Kurve wird ein Signal erzeugt, welches verwendet wird, um eine für den Fahrzeugführer jedenfalls spürbare Verzögerung des Fahrzeugs zu bewirken. Der Fahrgeschwindigkeitsregler wird bis zum Ende der Kurve ausgeblendet, um den Fahrzeugführer auf eine eventuelle Gefahrensituation aufmerksam zu machen. Nach dem Ende der Kurve wird ein durch die Fahrgeschwindigkeitsregler bzw. die Abstandsregelung vorgegebene Geschwindigkeit wieder aufgenommen.

Ein ähnliches Verfahren beschreibt die europäische Patentanmeldung EP 464 821 A1, wobei das Fahrzeug mit einem Sensor zur Hinderniserkennung ausgestattet ist. Zur Erkennung und Eliminierung von Hindernissen, die sich außerhalb des Fahrweges des Fahrzeuges befinden, wird anhand von momentanen Daten, die sich aus dem Fahrverhalten des Fahrzeuges und einer ermittelten Straßengeometrie ergeben, der voraussichtliche Fahrweg des Fahrzeuges ermittelt und die Sensordaten des Abstandssensors bewertet.

Ferner ist aus der EP 0 760 485 B1 ein Verfahren bekannt, bei dem auf Basis von Straßenkarteninformation einer im Kraftfahrzeug vorhandenen Navigationseinrichtung eine Bewertung des von einer Detektionseinrichtung erfaßten Hindernisses oder eine Einstellung der Detektionseinrichtung vorgenommen wird.

Nachteilig bei den bekannten Verfahren ist, daß die Auswahl von stehenden Zielobjekten auf Grund der systematischen Fehler der Fahrspurprädiktion problematisch ist, beispielsweise werden vor Kurven bei einem linearen Bezug des ADR-Systems Randobjekte regelmäßig als in der Fahrspur liegend betrachtet, so daß eine falsche Reaktion des ADR-Systems erfolgt. Bei heutigen ADR-Systemen werden daher stehende Objekte regelmäßig ignoriert.

Die Patentanmeldung DE 100 48 102 A1 offenbart die Merkmale des Oberbegriffs des Anspruchs 1 und des Oberbegriffs des Anspruchs 3. In dieser Schrift wird ein Zeitfenster entweder durch die Betätigungsdauer eines Bedienelemente durch den Fahrer definiert, d.h. solange der Fahrer das Bedienelement betätigt, werden ruhende Zielobjekte betrachtet. Alternativ ist das Zeitfenster fest vorgegeben, beispielsweise 2 oder 3 Sekunde.

Der Erfindung liegt daher die Aufgabe zugrunde, ein Verfahren und ein Vorrichtung zur Geschwindigkeits- und Abstandsregelung eines Kraftfahrzeugs mit verbesserter Zielauswahl zu schaffen.

Diese Aufgabe wird durch das Verfahren nach Anspruch 1 und die Vorrichtung nach Anspruch 3 gelöst. Bevorzugte Ausführungsformen der Erfindung sind Gegenstand der Unteransprüche.

Bei dem erfindungsgemäßen Verfahren zur Einbeziehung stehender Ziele in ein ADR-System, bei dem mit Hilfe einer Detektionseinheit der Abstand und/oder die Geschwindigkeit eines vor dem Kraftfahrzeug befindlichen Objekts erkannt wird, werden innerhalb eines vorgegebenen Zeitfensters stehende Objekte in die Zielauswahl der Detektionseinheit einbezogen.

Dadurch wird vorteilhafterweise erreicht, daß unakzeptable Fehlalarme während der normalen Fahrt vermieden werden, da stehende Objekte nur innerhalb des Zeitfensters in der Zielauswahl des ADR-Systems berücksichtigt werden. Diese Situation tritt beispielsweise auf, wenn ein Abbremsen vor einem stehenden relevanten Objekt, wie beispielsweise ein Stauende oder eine Folgefahrt auf ein stehendes Fahrzeug vor einer roten Ampel, zu erwarten ist.

Erfindungsgemäß wird der Beginn des Zeitfensters durch eine Fahreraktion definiert, die beispielsweise im Betätigen einer Taste, einer sogenannten Stop-Taste, oder im Ausführen der für einen Anhaltevorgang notwendigen Aktionen bestehen kann. Dabei wird die Stop-Taste vorzugsweise bei Fahrzeugen mit Automatikgetriebe eingesetzt, während bei Schaltgetrieben vorzugsweise die für einen Anhaltevorgang notwendigen Aktionen Einsatz finden. Derartige für den Anhaltevorgang notwendige Aktionen bestehen im Auskuppeln durch den Fahrer und/oder Einlegen der Leerlaufstellung des Getriebes. Diese Fahreraktionen können leicht erkannt werden und können daher zur Definition des Beginns des Zeitfensters verwendet werden.

Während des Zeitfensters werden daher stehende Objekte in die Zielauswahl des ADR-Systems einbezogen, es wird seitens des Fahrers nicht mehr beschleunigt und bei Kurvenfahrt kann proportional zur Krümmung die Geschwindigkeit leicht verzögert werden.

Das Ende des Zeitfensters ist erfindungsgemäß durch eine zurückgelegte Wegstrecke, durch den Stillstand des Fahrzeugs, durch das Einlegen eines Ganges, Einkuppeln des Getriebes oder durch eine durch den Fahrer bewirkte Beschleunigung des Fahrzeugs gegeben.

Mit dem Ende des Zeitfensters werden stehende Objekte wieder ignoriert und in die Zielauswahl des ADR-Systems nicht mehr einbezogen.

Ein erfindungsgemäßes ADR-System zur Durchführung des oben erläuterten Verfahrens in einem Kraftfahrzeug weist eine Einheit zum Bestimmen eines Zeitfensters auf, so daß das ADR-System innerhalb des vorgegebenen Zeitfensters stehende Objekt in die Zielauswahl einbezieht. Insbesondere weist das ADR-System eine Einheit zur Definition des Beginns und eine Einheit zur Definition des Endes des Zeitfensters auf.

Die Vorteile der Verwendung eines Zeitfensters, während dem stehende Objekte in die Zielauswahl einbezogen werden, liegen in den folgenden Punkten:
- Es gibt eine eindeutige Zuordnung der Fahrerverantwortung für das Bremsen vor stehenden Zielen.
- Der Fahrer ist sich nach der Aktivierung der Stop-Funktion der Situation bewußt und kann durch Bremsvorgänge - selbst Fehlbremsungen - nicht überrascht werden.
- Außerhalb des Zeitfensters gibt es eine geringe Fehlalarmrate.
- An die Sensorgeometrie werden keine hohen Ansprüche gestellt.
- Es wird keine zusätzliche Sensorik benötigt.

Eine bevorzugte Ausführungsform der Erfindung wird nachfolgend anhand der Zeichnungen näher erläutert. In den Zeichnungen zeigt
Fig. 1 ein Blockschaltbild eines erfindungsgemäßen ADR-Systems, und
Fig. 2 ein fahrendes Fahrzeug mit ADR-System in Betrieb.

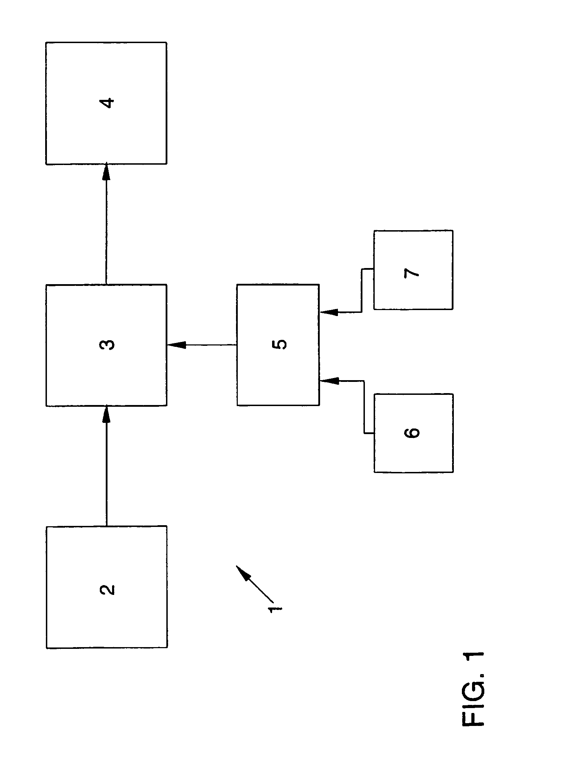

Fig. 1 zeigt ein Blockschaltbild eines erfindungsgemäßen ADR-Systems 1 mit einer Detektionseinheit 2, einer Verarbeitungseinheit 3, einer Geschwindigkeits- und Abstandsregeleinheit 4 und einer Zeitfenstereinheit 5. Die Zeitfenstereinheit 5 ist dabei mit einer Einheit 6 zur Definition des Beginn des Zeitfensters und einer Einheit 7 zur Definition des Endes des Zeitfensters verbunden. Durch die Detektionseinheit 2 werden Objekte detektiert, diese gibt die gemessenen Information an die Verarbeitungseinheit 3 weiter, wobei die Verarbeitungseinheit 3 im Fall eines durch die Zeitfenstereinheit 5 definierten Zeitfensters auch stehende Objekte berücksichtigt. Die Verarbeitungseinheit 3 gibt die ermittelten Objekte an die Geschwindigkeits- und Abstandsregeleinrichtung 4 weiter, die entsprechende Maßnahmen veranlaßt.

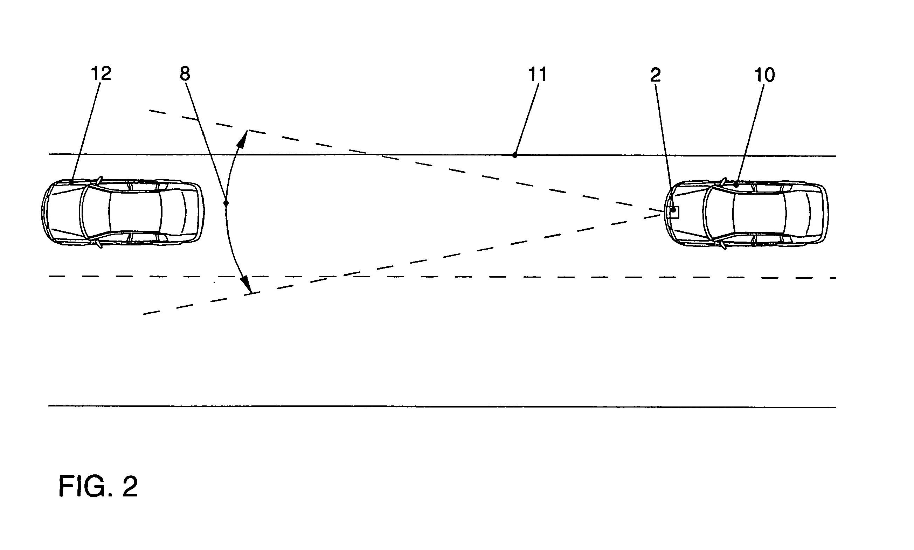

In Figur 2 fährt ein mit einem ADR-System 1 ausgestattetes Fahrzeug 10 auf einer Straße 11. Die Detektionseinrichtung 3, die beispielsweise auf Laser oder Radar basiert, des ADR-Systems definiert und durchsucht einen Suchraum 8, innerhalb dem sich in diesem Beispiel ein stehendes weiteres Fahrzeug 12 befindet. Beispielsweise definiert das stehenden Fahrzeug 12 ein Stauende. Aktiviert der Fahrer ein Zeitfenster, so wird das stehende Fahrzeug 12 in die Zielerfassung des ADR-Systems 1 einbezogen und entsprechende Maßnahmen ergriffen, beispielsweise ein Abbremsen des Fahrzeugs 1 bis es im Extremfall zum Stillstand kommt, falls sich das stehende Fahrzeug 12 nicht innerhalb des Zeitfensters in Bewegung setzt. Mit dem Stillstand des Fahrzeugs 10 wird das Zeitfenster geschlossen und es werden keine stehenden Objekte vom ADR-System mehr berücksichtigt.

### BEZUGSZEICHENLISTE

- 1: ADR-System
- 2: Detektionseinheit
- 3: Verarbeitungseinheit
- 4: Geschwindigkeits- und Abstandsregeleinheit
- 5: Zeitfenstereinheit
- 6: Einheit Beginn des Zeitfensters
- 7: Einheit Ende des Zeitfensters
- 8: Suchraum

- 10: Fahrzeug mit ADR-System
- 11: Straße
- 12: stehendes Fahrzeug

## Patentansprüche

1. Verfahren zur Einbeziehung stehender Ziele in ein ADR-System (1), bei dem mit Hilfe einer Detektionseinheit (2) der Abstand und/oder die Geschwindigkeit eines vor einem Kraftfahrzeug (10) befindlichen Objekts (12) erkannt wird, wobei innerhalb eines vorgegebenen Zeitfensters von der Detektionseinrichtung (1) erfaßte stehende Objekte (12) in die Zielauswahl des ADR-Systems (1) einbezogen werden und wobei der Beginn des Zeitfensters durch eine Fahreraktion definiert wird,
**dadurch gekennzeichnet, dass**
das Ende des Zeitfensters durch eine zurückgelegte Wegstrecke, durch den Stillstand des Fahrzeugs, durch das Einlegen eines Ganges, durch das Einkuppeln des Getriebes oder durch eine durch den Fahrer bewirkte Beschleunigung des Fahrzeugs gegeben ist.

2. Verfahren nach Anspruch 1, **dadurch gekennzeichnet, daß** die Fahreraktion im Betätigen einer Taste oder in für einen Anhaltevorgang notwendigen Aktionen besteht.

3. ADR-System zur Durchführung des Verfahrens nach einem der vorangegangenen Ansprüche in einem Kraftfahrzeug, wobei das ADR-System eine Einheit (5) zum Bestimmen eines Zeitfensters aufweist, so daß das ADR-System (1) innerhalb des vorgegebenen Zeitfensters stehende Objekt (12) in seine Zielauswahl einbezieht, und wobei das ADR-System (1) eine durch eine Fahreraktion betätigbare Einheit (6) zur Definition des Beginns des Zeitfensters aufweist,
**dadurch gekennzeichnet, dass**
das ADR-System eine Einheit (7) zur Definition des Endes des Zeitfensters aufweist, wobei das Ende des Zeitfensters durch eine zurückgelegte Wegstrecke, durch den Stillstand des Fahrzeugs, durch das Einlegen eines Ganges, durch das Einkuppeln des Getriebes oder durch eine durch den Fahrer bewirkte Beschleunigung des Fahrzeugs gegeben ist.

## Claims

1. Method for including stationary targets in an automatic distance control system (1), in which method the distance from and/or the speed of an object (12) located in front of a motor vehicle (10) is detected using a detection unit (2), wherein stationary objects (12) which are sensed by the detection device (1) within a predefined time window are included in the target selection of the automatic distance control system (1), and wherein the start of the time window is defined by a driver action,
**characterized in that**
the end of the time window is given by a distance covered, by the stationary state of the vehicle, by the engagement of a gear speed, by the putting of the gearbox in gear or by acceleration of the vehicle brought about by the driver.

2. Method according to Claim 1, **characterized in that** the driver action comprises activating a pushbutton key or actions which are necessary for a stopping process.

3. Automatic distance control system for carrying out the method according to one of the preceding claims in a motor vehicle, wherein the automatic distance control system has a unit (5) for determining a time window, and the automatic distance control system (1) therefore includes in its target selection objects (12) which are located within the predefined time window, and wherein the automatic distance control system (1) has a unit (6) which can be activated by a driver action and has the purpose of defining the start of the time window,
**characterized in that**
the automatic distance control system has a unit (7) for defining the end of the time window, wherein the end of the time window is given by a distance covered, by the stationary state of the vehicle, by the engagement of a gear speed, by the putting of gearbox in gear or by acceleration of the vehicle brought about by the driver.

## Revendications

1. Procédé pour inclure des cibles stationnaires dans un système ADR (1), avec lequel l'écart et/ou la vitesse d'un objet (12) qui se trouve devant un véhicule automobile (10) est détecté à l'aide d'une unité de détection (2), les objets stationnaires (12) détectés par le dispositif de détection (1) pendant un créneau temporel prédéfini étant inclus dans la sélection de cible du système ADR (1) et le début du créneau temporel étant défini par une action du conducteur, **caractérisé en ce que** la fin du créneau temporel est définie par un trajet parcouru, par l'immobilisation du véhicule, par l'engagement d'un rapport, par l'embrayage de la boîte de vitesses ou par une accélération du véhicule provoquée par le conducteur.

2. Procédé selon la revendication 1, **caractérisé en ce que** l'action du conducteur consiste à actionner une touche ou en les actions requises pour un processus d'arrêt.

3. Système ADR destiné à mettre en oeuvre le procédé selon l'une des revendications précédentes dans un véhicule automobile, le système ADR présentant une unité (5) pour déterminer un créneau temporel de telle sorte que le système ADR (1) inclut dans sa sélection de cible un objet (12) qui est stationnaire pendant le créneau temporel prédéfini et le système ADR (1) présentant une unité (6) pouvant être actionnée par une action du conducteur en vue de définir le début du créneau temporel, **caractérisé en ce que** le système ADR présente une unité (7) pour fixer la fin du créneau temporel, la fin du créneau temporel étant définie par un trajet parcouru, par l'immobilisation du véhicule, par l'engagement d'un rapport, par l'embrayage de la boite de vitesses ou par une accélération du véhicule provoquée par le conducteur.
